# EUROPEAN PATENT APPLICATION

(11) **EP 1 076 234 A1**
(43) Date of publication of application: **14.02.2001**
(21) Application number: 99918268.6
(22) Date of filing: 28.04.1999
(51) Int. Cl.: G01N 15/08

(54) **MEMBRANE BREAKAGE DETECTION DEVICE**

(30) Priority: 28.04.1998 JP 11896798; 29.07.1998 JP 21396098
(71) Applicant: Asahi Kasei Kogyo Kabushiki Kaisha, Osaka-shi, Osaka 530-8205 (JP)
(72) Inventor: NEJIGAKI, Tatsuo, Fuji-shi, Sizuoka 416-0917 (JP)
(74) Representative: Weber, Thomas, Dr.Dipl.-Chem.
(86) International application number: JP9902295
(87) International publication number: WO9956107

(57) **Abstract**

A membrane breakage detection device capable of detecting the membrane breakage of a filtering device by introducing part of filtrate discharged from the filtering device to the detection cell of an in-liquid fine grain detector (7) and detecting fine grains in the filtrate in the detection cell and capable of simply cleaning the interior of the detection cell, wherein a second flow path (8) is provided as a bypass of a first flow path (2) for introducing part of the filtrate to the detection cell, and a solenoid valve (11), a polisher (12) and a microfiltration membrane module (13) are installed in the second flow path, thereby, when cleaning the interior of the detection cell, the filtrate is passed to the second flow path with a solenoid valve in the first flow path closed and the solenoid valve in the second flow path opened to enable the filtrate purified in the second flow path to be introduced as a cleaning liquid into the detection cell.

## Description

### TECHNICAL FIELD

This invention concerns a membrane breakage detection device for detecting membrane breakage in a filtering device using a membrane.

### BACKGROUND ART

As a filtering device for purifying a great amount of water of rivers, water of lakes and marshes, ground water or sea water, a filtering device using hollow fiber membranes have been adopted so far. In the filtering device, a membrane breakage detection device that detects breakage of the hollow fiber membranes (thread breaking) in a filtration membrane module is disposed with an aim of maintaining the filtering performance.

The membrane breakage detection device comprises, for example, an in-liquid fine grain detector of a light scattering type. The in-liquid fine grain detector is so adapted to introduce a part of filtrate formed by filtration in the filtering device into a detection cell, irradiate a laser beam to the filtrate in the detection cell and detect a reflected light. Then, the grain size and the number of grains for fine grains contained in the filtrate are measured from the detected light quantity, and the membrane breakage of the filtering device is detected based on the result of the measurement.

Since the detection accuracy for the fine grains by the in-liquid fine grain detector is lowered when contamination such as fine grains is deposited and remains on the inner wall surface of the detection cell in the membrane breakage detection device, the inside of the detection cell has to be cleaned relatively frequently.

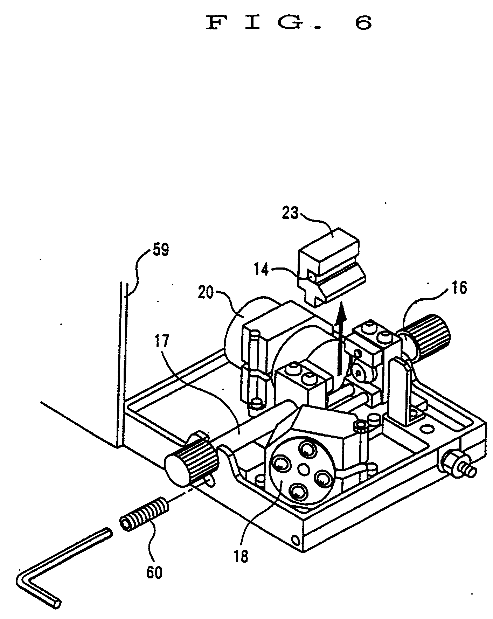

Fig. 6 is a perspective view illustrating the inside of an in-liquid fine grain detector. When a detection cell 14 is cleaned, a pipeline from a pure water supply device is connected to either one of flow channels 16 and 17 connected with an inlet and an exit of the detection cell 14. Then, pure water is introduced from the pure water supply device to the pipeline, to thoroughly clean the inside of the flow channel 16 on the inlet and the detection cell 14 with running water so as not to leave filtrate.

Then, a power source is turned off so as to prevent a laser beam from a light source 18 from leaking externally when a cover 59 is removed. Then, after removing the cover 59 and detaching a locking screw 60 by a hexagonal rod wrench, an attachment/detachment screw for a cell holder 23 is released. The detection cell 14 is mounted to the cell holder 23. Then, after sliding a cell joint for the flow channels 16 and 17 and the detection cell 14, the cell holder 23 is raised and removed.

Then, the cell holder 14, while being integrated with the cell holder 23, is put into a supersonic cleaner or the like and cleaned with pure water, acetone, a detergent for optical parts or a cleaning liquid such as an alcohol. Then, after cleaning the inside and the outside of the detection cell 14 thoroughly with pure water, the inside is filled with pure water and the water at the outside is blown off by clean air. Then, the cell holder 23 is mounted to the original position with the pure water being filled in the detection cell 14.

The cleaning operation described above is troublesome and extremely time consuming. This invention has been accomplished taking notice on the foregoing problem in the prior art and it is a subject thereof to provide a membrane breakage detection device capable of simply cleaning the inner wall surface of a detection cell.

### DISCLOSURE OF THE INVENTION

For solving the subject, this invention provides a membrane breakage detection device adapted to introduce a part of filtrate formed by filtration in a membrane filtering device into a detection cell and measure the grain size and the number of grains of fine grains contained in the filtrate in the detection cell by a fine grain counter, to detect membrane breakage of the filtering device by the measurement, wherein the device comprises a first flow channel for introducing a part of the filtrate into the detection cell, a second flow channel for introducing a cleaning liquid to the detection cell, each of flow channel opening/closing means for opening/closing the flow channels, and a control means for controlling the flow channel opening/closing means.

In the device according to this invention, when the inside of the detection cell is cleaned, the channel opening/closing means for the first flow channel is closed and the channel opening/closing means for the second flow channel is opened by the control means, and a cleaning liquid is supplied to the second flow channel. Thus, since the first flow channel is closed and the second flow channel is opened, the cleaning liquid is introduced through the second flow channel into the detection cell and the filtrate is not introduced into the detection cell.

After the completion of cleaning in the detection cell, supply of the cleaning liquid to the second flow channel is stopped and the flow channel opening/closing means for the first flow channel is opened and the second flow channel opening/closing means is closed by the control means. Since this closes the second flow channel and opens the first flow channel, the filtrate is now introduced into the detection cell and the cleaning liquid is not introduced through the second flow channel into the detection cell.

In a preferred embodiment of the membrane breakage detection device according to this invention, the second flow channel constitutes a bypass of the first flow channel, an ion exchange resin column and a filtration membrane module are disposed in the second flow channel, and a flow channel opening/closing means for the first flow channel is disposed to the second flow channel at a position between the point of branch from the first flow channel and the point of junction with the first flow channel.

In another preferred embodiment of the membrane breakage detection device according to this invention, a cleaning liquid supply device is connected to the upstream of the second flow channel, and the downstream of the second flow channel is joined with the first flow channel at the downstream of the flow channel opening/closing means for the first flow channel.

A further preferred embodiment of the membrane breakage detection device according to this invention, a piezoelectric element connected with a supersonic oscillator is disposed to a cell holder for holding the detection cell.

### BRIEF DESCRIPTION OF THE DRAWINGS

Fig. 1 is a schematic constitutional view illustrating a membrane breakage detection device corresponding to a first embodiment according to this invention.
Fig. 2 is a schematic constitutional view illustrating an in-liquid fine grain detector constituting the membrane breakage detection device of Fig. 1.
Fig. 3 is a perspective view illustrating an in-liquid fine grain detector constituting the membrane breakage detection device of Fig. 1.
Fig. 4 is a schematic constitutional view illustrating a membrane breakage detection device corresponding to a second embodiment according to this invention.

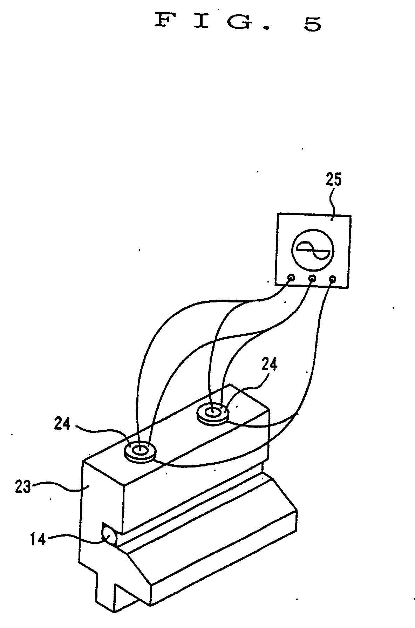

Fig. 5 is a perspective view illustrating a cell holder for an in-liquid fine grain detector constituting a film breakage detection device of Fig. 4.
Fig. 6 is a perspective view illustrating the inside of an in-liquid fine grain detector, showing a state with a cell bolder being removed.

### Best Mode for Practicing the Invention

Preferred embodiments of this invention are to be explained below.

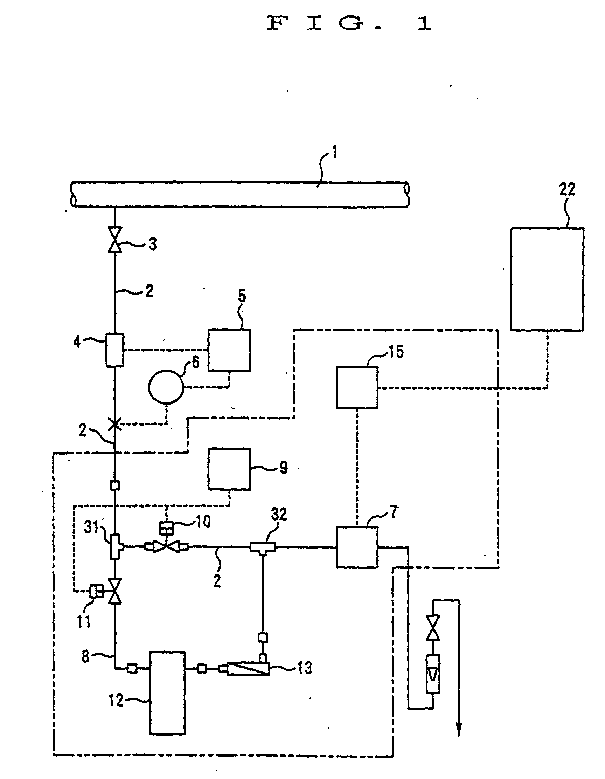

Fig. 1 is a schematic constitutional view illustrating a membrane breakage detection device corresponding to a first embodiment according to this invention.

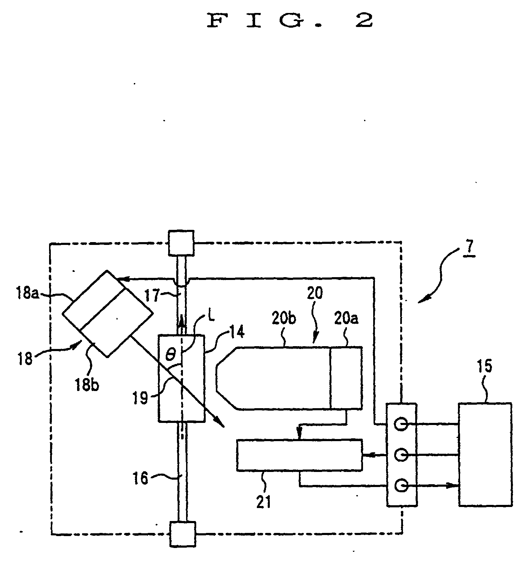

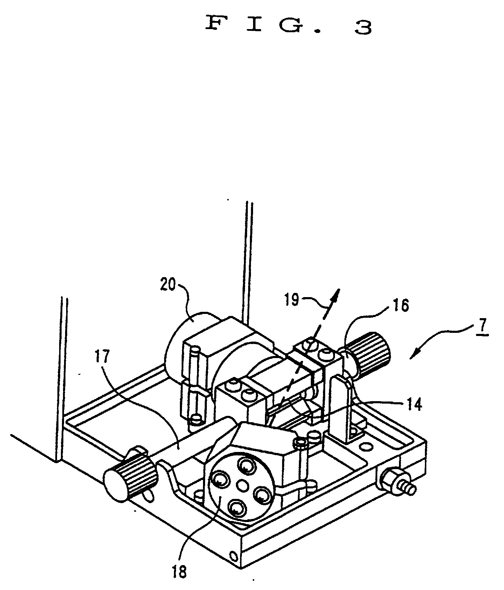

The membrane breakage detection device comprises an in-liquid fine grain detector 7 of a light scattering type. As shown in Fig. 2 and Fig. 3, the in-liquid fine grain detector 7 is constituted with a detection cell 14 made of quartz glass, a flow channel 16 connected to an inlet of detection cell 14, a flow channel 17 connected to an exit of the detection cell 14, a beam irradiation section 18 for irradiating a laser beam 19 to the detection cell 14, a photodetecting section 20 for detecting the laser beam 19, and a fine grain signal analyzer section 21 for analyzing signals from the photodetecting section 20.

The detection cell 14 has, for example, a quadrilateral cross sectional shape of 4 to 5 mm size for each side, and the flow channels 16 and 17 are formed, for example, of polytetrafluoroethylene (PTFE) or polyfluoroacrylate (PFA).

The light irradiation section 18 is constituted with light source 18a comprising a semiconductor laser (for example, laser diode) and a lens system 18b. The laser beam 19 is entered through the lens system 18b at a predetermined angle θ to a flowing direction L of a liquid in the detection cell 14.

The photodetecting section 20 is constituted, for example, with a photodetector 20a comprising a photodiode and a lens system 20b, which is disposed on the side of the detection cell 14. When fine grains are present in the filtrate in the detection cell 14, the laser beam 19 reflected upon hitting the fine grains is introduced through the lens system 20b to the photodetector 20a and detected by the photodetecting section 20. If the fine grains are not present in the filtrate in the detection cell 14, since the laser beam 19 does not enter the lens system 20b, it is not detected by the photodetecting section 20.

The photodetecting signals from the photodetector 20a are outputted by way of the fine grain signal analyzer section 21 to a fine grain counter 15.

The fine grain counter 15 calculates the grain size and the number of grains (concentration) of the fine grains contained in the filtrate in the detection cell 14 based on the photodetecting signals analyzed by the fine grain signal analyzer section 21. Further, it judges, based on the calculated values, whether the fine grains contained in the filtrate in the detection cell 14 has reached a predetermined concentration or not, thereby detecting the membrane breakage of the filtering device.

This embodiment is adapted to flow 50 cc of filtrate in one minute in the detection cell and judge occurrence of membrane breakage of the filtering device when fine grains by the number of 200 are detected during the period.

On the other hand, a filtering device comprising a filtration membrane module having hollow fiber membranes is disposed to the upstream of the filtrate discharge pipeline 1 shown in Fig. 1, and the filtrate formed by filtration in the filtering device is discharged to the filtrate discharge pipeline 1. The fine grain counter 15 is connected with a control board 22 for controlling the filtering device. The control board 22 stops the filtering device or generates an alarm based on the membrane breakage detection signal from the fine grain counter 15.

The flow channel 16 at the inlet of the in-liquid fine grain detector 7 and the filtrate discharge pipeline 1 are connected with a first flow channel (membrane breakage detection pipeline) 2. In the first flow channel 2, are disposed, orderly from the upstream, a valve 3, a heater 4, a branched pipe 31, a solenoid valve (first flow channel opening/closing means) 10 and a branch tube 32. The valve 3 is a main valve which is normally opened.

The heater 4 serves to heat the first flow channel 2 and is controlled by a heater operation board 5 and a temperature control device 6 such that the temperature of the filtrate passing through the first flow channel 2 is substantially at a constant level (usually 10°C or higher). This can prevent dewing or freezing filtrate even when the temperature is low. Opening/closing of the solenoid valve 10 is controlled by an automatic valve operation board (control means) 9.

A second flow channel (purified cleaning water forming pipeline) is connected between a branched tube 31 and a branched tube 32. That is, the second flow channel 8 constitutes a bypass of the first flow channel 2, in which the branched tube 31 forms a point of branch of the second flow channel 8 from the first flow channel 2 while the branched tube 32 forms a point of junction of the second flow channel 8 with the first flow channel 2.

In the second flow channel 8 are disposed, orderly from the upstream, a solenoid valve (second flow channel opening/closing means) 11, a polisher (ion exchange resin column) 12 and a microfiltration (MF) membrane module 13. The opening/closing of the solenoid valve 11 is controlled by an automatic valve operation board 9. For the precision filtration membranes of the microfiltration membrane module 13, hollow fiber membranes, pleats membranes, flat membranes or MF cartridge comprising synthetic resin or ceramic can be used.

When a filtrate is introduced into the second flow channel 8 ions in the filtrate are at first removed by the polisher 12 to form primary pure water. Then, the primary pure water is further put to precise filtration by the microfiltration membrane module 13 and, as a result, colloidal matters present in the primary pure water are removed to form highly pure water at an extremely high purity.

Instead of the microfiltration membrane module 13, ultra-filtration (UF) membrane module having hollow fiber membranes may also be used. However, since the microfiltaration membrane has higher filtration flow rate of membrane than that of the ultra-filtration membrane, use of the microfiltration membrane module is preferred.

Accordingly, in the membrane breakage detection device of this embodiment, when the membrane breakage (breaking of hollow fiber membranes) of the filtering device for discharging the filtrate to the filtrate discharge pipeline 1 is detected, the automatic vale operation board 9 is operated to open the solenoid valve 10 and close the solenoid valve 11. This introduces a part of the filtrate in the filtrate discharge pipeline 1 through the first flow channel to the in-liquid fine grain detector 7 and introduce the same from the flow channel 16 at the inlet into the detection cell 14.

Then, fine grains contained in the filtrate are detected in the in-liquid fine grain detector 7 and the membrane breakage is detected by the fine grain counter 15. When the membrane breakage is detected, the control board 22 stops the filtering device or generates an alarm.

When the inside of the detection cell 14 of the in-liquid fine detector 7 is cleaned, the automatic valve operation board 9 is operated to close the solenoid valve 10 and open the solenoid valve 11. Then, a part of the filtrate in the filtrate discharge pipeline 1 passes through the first channel 2 as far as the branched pipe 31 and enters from the branched pipe 31 into the second flow channel 8.

The filtrate entering the second flow channel 8 is purified into pure water at an extremely high purity by the polisher 12 and the microfiltration membrane module 13. The pure water enters from the branched pipe 32 into the first flow channel 2, is introduced to the in-liquid fine grain detector 7 and then introduced from the flow channel 16 on the inlet into the detection cell 14. The inside of the detection cell 14 is cleaned with the pure water.

Accordingly, in this device, when the inside of the detection cell 14 is cleaned, it is not necessary to detach the cover of the in-liquid fine grain detector 7 and take out the cell holder. That is, according to the membrane breakage detection device of this embodiment, the inner wall surface of the detection cell 14 of the in-liquid fine grain detector 7 can be cleaned extremely simply compared with the existent method.

Further, in this embodiment, since the filtrate introduced for detecting the membrane breakage is cleaned to obtain pure water and the pure water is used as a cleaning liquid, it has also an effect that provision of the cleaning liquid is no more necessary.

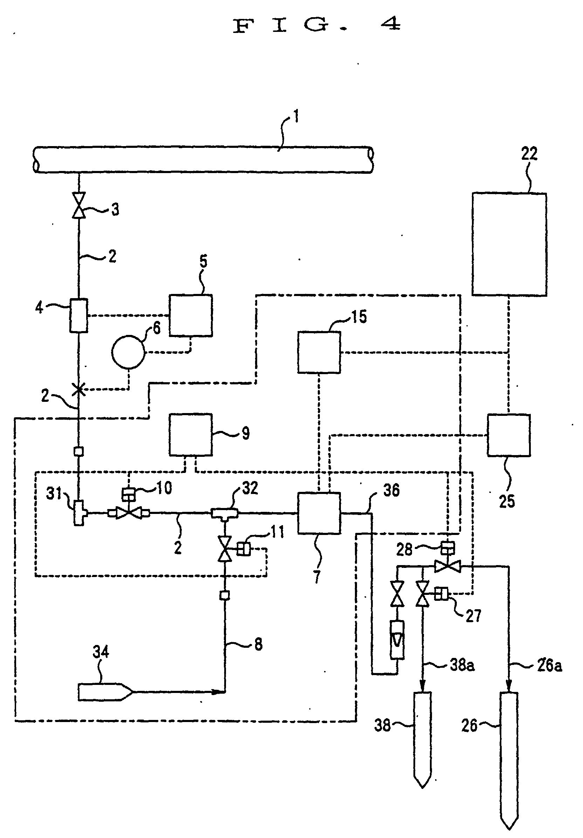

Fig. 4 is a schematic constitutional view illustrating a membrane breakage detection device corresponding to a second embodiment of this invention.

The membrane breakage detection device according to this embodiment has a same basic constitution as that of the membrane breakage detection device of the first embodiment shown in Fig. 1. Explanation is to be made for the features different from the first embodiment.

In the membrane breakage detection device of this embodiment, a branched tube 31 of a first flow channel 2 is closed at one end on the downstream, where a second flow channel 8 is not connected. A cleaning liquid supply device 34 is connected to the upstream of second flow channel 8. The downstream end of the second flow channel 8 is joined with the first flow channel 2 at a branched tube 32 in the same manner as in Fig. 1. Further, a solenoid valve 11 is disposed in the second flow channel 8.

That is, in this embodiment, the inside of the detection cell 14 of the in-liquid fine grain detector 7 is cleaned with a cleaning solution supplied from the cleaning liquid supply device 34. As the cleaning liquid supplied from the cleaning liquid supply device 34, a solution, for example, of sodium hypochlorite (NaClO), sodium hydroxide (NaOH), oxalic acid (C₂H₂O₄), nitric acid (HNO₃), hydrochloric acid (HCl) or citric acid (C₆H₈O₇) or pure water can be used.

Further, in this embodiment, a piezoelectric element 24 is disposed to a cell holder 23 for holding a detection cell 14 of the in-liquid fine grain detector 7. The piezoelectric element 24 serves to provide supersonic vibrations to the detection cell 14 and is connected with a supersonic oscillator 25 disposed to the outside of the in-liquid fine grain detector 7. The supersonic oscillator 25 is controlled by a control board 22.

When supersonic vibrations are given to the detection cell 14 by way of the cell holder 23 with the cleaning liquid being filled in the detection cell 14, bubbles accompanied by cavitation are generated in the cleaning liquid in the detection cell and localized high pressure impact waves are generated upon collapse of the bubbles. The inner surface of the detection cell 14 is cleaned effectively by the high pressure impact waves.

A magnetostrictive vibrator may be disposed instead of the piezoelectric element 24 as an electrostrictive vibrator. Further, such a vibrator may be bonded directly to the inner wall surface of the detection cell 14.

Also, in this embodiment, a waste liquid tank 38 for filtrate and a waste liquid tank 26 for cleaning liquid are connected to a waste liquid pipeline 36 of the in-liquid fine grain detector 7. Solenoid valves 27 and 28 are disposed, respectively, to pipelines 38a and 26a for connecting the waste liquid tanks 38 and 26 with the waste liquid pipeline 36. The solenoid valves 27 and 28 are controlled by an automatic valve operation board 9.

Accordingly, in the membrane breakage detection device of this embodiment, when the membrane breakage of the filtering device for discharging the filtrate to the filtrate discharge pipeline 1 is detected, the automatic valve control board 9 is at first operated to open the solenoid valve 10 and close the solenoid valve 11, as well as open the solenoid valve 27 and close the solenoid valve 28. This introduces a part of the filtrate in the filtrate discharging pipeline 1 through the first flow channel 2 to the in-liquid fine grain detector 7 and introduces the same from the flow channel 16 at the inlet into the detection cell 14.

Then, the fine grains contained in the filtrate are detected in the in-liquid fine grain detector 7, and the membrane breakage is detected by the fine grain counter 15. If the membrane breakage is detected, the control board 22 stops the filtering device or generates an alarm or the like. Further, the filtrate introduced into the detection cell 14 enters from the flow channel 17 at the exit in the waste liquid pipeline 36 and is then recovered passing through the pipeline 38a into the waste liquid tank 38 for filtrate.

When the inside of the detection cell 14 of the in-liquid fine grain detector 7 is cleaned, the automatic valve operation board 9 is operated to close the solenoid valve 10 and open the solenoid valve 11, as well as close the solenoid valve 27 and open the solenoid valve 28. In this state, when a cleaning liquid is introduced from the cleaning liquid supply device 34 to the second flow channel 8, the cleaning liquid entering the second flow channel 8 is introduced from the branched pipe 32 passing through the first flow channel 2 to the in-liquid fine grain detector 7 and is introduced from the flow channel 16 at the inlet into the detection cell 14.

Further, the supersonic oscillator 25 is actuated by operating the control board 22 to give supersonic vibrations by way of the cell holder 23 to the detection cell 14. Then, the inner wall surface of the detection cell 14 is put to supersonic cleaning by the cleaning liquid introduced passing through the second flow channel 8 into the detection cell 14. The cleaning liquid introduced into the detection cell 14 enters from the flow channel 17 at the exit into the pipeline 36 for waste liquid and then passes through the pipeline 26a and is recovered in the waste liquid tank 26 for cleaning liquid.

Accordingly, in this device, when the inside of the detection cell 14 is cleaned, it is not necessary to detach the cover for the in-liquid fine grain detector 7 and take out the cell holder. That is, according to the membrane breakage detection device of this embodiment, the inner wall surface of the detection cell 14 of the in-liquid fine grain detector 7 can be cleaned extremely simply compared with the existent method.

Further, in this embodiment, since cleaning for the detection cell 14 is conducted while applying supersonic vibrations, higher cleaning effect than that in the device of the first embodiment can be attained even when pure water is used as the cleaning liquid. Further, in this embodiment, a liquid chemical of higher cleaning power than pure water can also be used as the cleaning liquid. This can provide a higher cleaning effect.

Further, when pure water is used as the cleaning liquid, since the waste liquid of the cleaning liquid can be recovered in the waste liquid tank 38 for filtrate, there is no requirement for disposing the waste liquid tank 26 for cleaning liquid.

As the membrane breakage detection device corresponding to the third embodiment of this invention, a device of the same basic constitution with that of the second embodiment but having no mechanism for giving supersonic vibrations to the detection cell 14 can be mentioned. That is, in the membrane breakage detection device of this embodiment, the cell holder 23 is neither mounted with the piezoelectric element 24 nor disposed with the supersonic oscillator 25.

This device is used in the same manner as the second embodiment described above excepting that the supersonic oscillator 25 is not actuated. Accordingly, in this device, it is not necessary to detach the cover for the in-liquid fine grain detector 7 and take out the cell holder upon cleaning the inside of the detection cell 14. That is, according to the membrane breakage detection device of this embodiment, the inner wall surface of the detection cell 14 of the in-liquid fine grain detector 7 can be cleaned extremely simply compared with the existent method.

Further, in this embodiment, a liquid chemical of higher cleaning power than pure water can be used as the cleaning liquid. This can provide a higher cleaning effect than that in the device of the first embodiment.

Further, the cleaning frequency and the timing for the inside of the detection cell can be selected properly depending on the contamination of the detection cell 14.

### INDUSTRIAL APPLICABILITY

As has been described above according to the membrane breakage detection device of this invention, the inside of the detection cell of the in-liquid fine grain detector can be cleaned extremely simply compared with the existent method. Accordingly, since the membrane breakage of the filtering device can be detected at any time as necessary, it is possible to maintain reliable and safe filtration by the filtering device.

## Claims

1. A membrane breakage detection device for detecting the membrane breakage of a filtering device using membranes by introducing a part of filtrate formed by filtration in the filtering device into a detection cell and detecting fine grains contained in the filtrate in the detection cell, comprising:
a first flow channel for introducing a part of the filtrate into the detection cell, a second flow channel for introducing a cleaning liquid into the detection cell, each of flow channel opening/closing means for opening/closing said flow channels, and a control means for controlling the flow channel opening/closing means.

2. A membrane breakage detection device as defined in claim 1, wherein the second flow channel constitutes a bypass of the first flow channel, an ion exchange resin column and a filtration membrane module are disposed in the second flow channel, and a flow channel opening/closing means for the of the first flow channel is disposed to the second flow channel at a position between a point of branch from the first flow channel and the point of junction with the first flow channel.

3. A membrane breakage detection device as defined in claim 1, wherein a cleaning liquid supply device is connected to the upstream of the second flow channel, and the downstream of the second flow channel is joined with the first flow channel at the downstream of the flow channel opening/closing means for the first flow channel.

4. A membrane breakage detection device as defined in claim 1, wherein a piezoelectric element connected with a supersonic oscillator is disposed to a cell holder for holding the detection cell.
